**Europäisches Patentamt**

**European Patent Office**

**Office européen des brevets**

(19)

(11) Veröffentlichungsnummer : **0 368 837 B1**

(12) ## EUROPÄISCHE PATENTSCHRIFT

(45) Veröffentlichungstag der Patentschrift :
**13.01.93 Patentblatt 93/02**

(51) Int. Cl.$^5$ : **C04B 35/10,** C04B 35/80

(21) Anmeldenummer : **89890279.6**

(22) Anmeldetag : **30.10.89**

(54) **Gesintertes mikrokristallines keramisches Material.**

(30) Priorität : **02.11.88 AT 2695/88**
**26.01.89 AT 153/89**
**26.07.89 AT 1802/89**

(43) Veröffentlichungstag der Anmeldung :
**16.05.90 Patentblatt 90/20**

(45) Bekanntmachung des Hinweises auf die
Patenterteilung :
**13.01.93 Patentblatt 93/02**

(84) Benannte Vertragsstaaten :
**AT DE FR GB IT**

(56) Entgegenhaltungen :
**US-A- 4 341 965**
**US-A- 4 650 774**
**CHEMICAL ABSTRACTS, Band 108, Nr. 8, 22.**
**Februar 1988, Seite 324, Zusammenfassung**
**nr. 61249h, Columbus, Ohio, US.**

(73) Patentinhaber : **Treibacher Chemische Werke**
**Aktiengesellschaft**
**Postfach 31**
**A-9330 Treibach (AT)**

(72) Erfinder : **Winkler, Herwig, Dr.**
**Elsässerstrasse 11**
**A-9020 Klagenfurt (AT)**
Erfinder : **Janz, Peter, Dr.**
**Feldkirchner Strasse 67**
**A-9020 Klagenfurt (AT)**
Erfinder : **Gottschamel, Georg, Dr.**
**Kansnitstrasse 10/3**
**A-9330 Treibach (AT)**

(74) Vertreter : **Kliment, Peter, Dipl.-Ing. Mag.-jur.**
**Singerstrasse 8/3/8**
**A-1010 Wien (AT)**

## Beschreibung

Die vorliegende Erfindung betrifft ein gesintertes, mikrokristallines, keramisches Material auf der Basis von $\alpha$ Al$_2$O$_3$ mit einem Zusatz von 0,01 bis 2 Gew.-%, vorzugsweise 0,01 bis 0.5 Gew.-% einer Cerverbindung.

Aus der EP-A 293 164 ist ein keramisches Schleifmaterial bekannt, das mindestens 0,5 Gew.-% einer Seltenerdverbindung enthält. Das fertige Schleifmaterial weist dabei eine Phase auf, die aus dem Reaktionsprodukt aus dem Oxid einer seltenen Erde mit dem Aluminiumoxid besteht. Gute Schleifleistungen werden dabei jedoch nur erzielt, wenn die Seltenerdverbindung mit mindestens 0,5 Gew.-% jedoch vorzugsweise 1 Gew.-% vorliegt.

Weiters sind feinkörnige Schleifmaterialien bekannt. So beschreibt die EP-PS 0 24 099 ein mikrokristallines Schleifmaterial auf Basis $\alpha$-Al$_2$O$_3$, das durch Sintern eines Aluminiumoxidhydratgels bei ca. 1400°C hergestellt wird. Zur Erreichung einer guten Schleifleistung ist danach jedoch ein weiterer Zusatz mindestens einer modifizierenden Komponente nötig. Als modifizierende Komponente werden mindestens 10 Vol.-% ZrO$_2$ und/oder HfO$_2$ und/oder mindestens 1 Vol.-% eines Spinells aus Al$_2$O$_3$ mit Oxiden von Co, Ni, Zn oder Mg vorgeschlagen.

Die Wirkung eines Zusatzes von feinsten $\alpha$-Al$_2$O$_3$ zu einem Aluminiumoxidhydratgel vor dem Sintern wird in der EP-A 0 152 768 beschrieben. Danach kann die Sintertemperatur durch diesen Zusatz gesenkt und die Kristallitengröße des Schleifmaterials gering gehalten werden. Dabei kommt es bei zu langen Sinterzeiten zur Bildung von unerwünschten, groben, länglichen ("lath-like") Kristalliten.

Wie M. Kugami (J. Amer. Cer. Soc., 68/1985, S. 500) feststellte, sollten die zugesetzten $\alpha$-Al$_2$O$_3$-Teilchen nicht größer als 0,1$\mu$m sein. Die Schwierigkeit der Herstellung eines so feinen, grobkornfreien Pulvers bildet einen wesentlichen Nachteil dieses Verfahrens.

In der US-PS 4,744,802 wird daher Eisenoxid als keimbildender Zusatz vorgeschlagen. Wird dabei allerdings die Löslichkeit des Fe$_2$O$_3$ im Al$_2$O$_3$ überschritten, so kommt es zur Bildung von Aluminaten, die geringere Härte besitzen.

Die EP-A 0 263 810 (TCW) beschreibt ein mikrokristallines, gesintertes Schleifmaterial hoher Qualität, ohne daß bei der Herstellung ein keimbildender Zusatz erforderlich ist.

Aufgabe der Erfindung ist es, ein keramisches Material zu schaffen, das sich als Schleifmaterial eignet und das aufgrund seiner besonderen Struktur eine besondere Zähigkeit bei gleichzeitig vorhandener hoher Schleifleistung aufweist.

Dieses Ziel wird dadurch erreicht, daß das keramische Material aus einer kristallinen Matrix und 0,1 - 30 Vol.-% vorzugsweise 1 - 25 Vol.-% und besonders vorzugsweise 1 - 15 Vol.-% whiskerähnlichen Nadeln besteht, wobei die Cerverbindung im Wesentlichen den Nadeln vorliegt.

Im Gegensatz zum EU-A 0 152 768, das die Gegenwart der durch zu hohe Sintertemperatur entstandenen länglichen Kristallite als unerwünscht betrachtet, wurde nämlich überraschenderweise festgestellt, daß die whiskerähnlichen Nadeln die mechanischen Eigenschaften der Schleifkörner wesentlich verbessern, wenn bei der Entstehung der Nadeln Ceroxid in reaktiver Form vorhanden ist. Der Durchmesser der Stäbchen liegt zwischen 0,2 und 1$\mu$m. Die Länge beträgt 1 bis 10$\mu$m. Der Volumsanteil Nadeln liegt zwischen 1 und 30 % je nach Herstellungsbedingungen.

Die Al$_2$O$_3$-Matrix hat eine vorzugsweise Kristallitengröße von unter 0,5$\mu$m und ein sehr gleichmäßiges Gefüge.

Weiters betrifft die Erfindung ein Verfahren zur Herstellung eines keramischen Materials durch Einrühren eines hochdispersen $\alpha$-Aluminiumoxidhydrats in eine verdünnte Säurelösung, Zugabe einer Cerverbindung im Ausmaß 0,01 - 2 Gew.-%, vorzugsweise 0,01 - 0,5 Gew.-% bezogen auf das $\alpha$-Aluminiumoxidhydrat, Trocknung, Zerkleinerung und Sinterung. Dieses Verfahren ist dadurch gekennzeichnet, daß die Suspension vor der Trocknung entlüftet und desagglomeriert wird und daß der Sintervorgang mehrstufig und vorzugsweise teilweise unter Gasdruck durchgeführt wird.

Dabei wird der Sinterprozeß so geführt, daß sich dabei neben einer submikrokristallinen Al$_2$O$_3$-Matrix nadelförmige Kristalle ausbilden.

Die Anwendung des Drucks während der Umwandlung von $\delta$ über $\theta$ in $\alpha$-Al$_2$O$_3$ bewirkt vermutlich innere Spannungen zwischen den Kristallen der verschiedenen Modifikationen von Al$_2$O$_3$, die unterschiedliche Wachstumsgeschwindigkeiten der verschiedenen kristallografischen Ebenen hervorrufen. Dadurch kommt es zu einem anisotropen Wachstum der $\alpha$-Al$_2$O$_3$-Kristalle und zu deren länglicher Form. Diese Spannungen treten vermutlich nur vereinzelt an Inhomogenitätsstellen des Gefüges auf, dadurch ergibt sich die charakteristische Struktur mit Nadeln in einer feinkörnigen Matrix.

Die Nadeln unterscheiden sich von der Matrix durch den Cergehalt etwas in den Eigenschaften. Die bei Temperaturwechsel entstehenden Spannungen zwischen Matrix und Nadeln bewirken ein geringes Ablösen der Nadeln von der Matrix (Mikroriß). Deshalb werden Risse, die auf eine Nadel treffen, abgelenkt. Die Spannung, die die Nadeln bricht, wird verringert, da die Nadel nicht vollkommen fest mit der Matrix verbunden ist.

Die Haftkräfte reichen jedoch aus, die Matrix noch zusammenzuhalten.

Die Schleifleistung wird vermutlich außerdem noch durch einen Selbstschärfeffekt erhöht. Die Rißablenkung an den Nadeln kann zur Ausbildung neuer, scharfer Bruchkanten beitragen. Die Größe der abgebrochenen Bruchstücke wird vermutlich hauptsächlich vom Abstand der Nadeln voneinander bestimmt. Für bestimmte Anwendungen könnte also das Verschleißverhalten durch Variation der Nadelkonzentration (Anzahl je Volumseinheit) angepaßt und optimiert werden.

Die Nadeln sind einkristalline, feste Lösungen von $\alpha$-$Al_2O_3$ mit $CeO_2$, das Material wird dadurch zäher, die Struktur verstärkt. Ein Überschuß an $CeO_2$, der zum Entstehen von $CeO_2$-Partikeln in größerer Menge in der Matrix führt, verschlechtert die mechanischen Eigenschaften der Al-Oxidkörner wieder. Der $CeO_2$-Zusatz soll also nie die Menge überschreiten, die noch von den whiskerähnlichen Nadeln in fester Lösung aufgenommen werden kann. Die besten Ergebnisse wurden daher bei $CeO_2$-Gehalten unter 0,5 Gew.-% bezogen auf den Gesamt-$\alpha$-$Al_2O_3$-Gehalt des keramischen Materials erzielt.

Vorzugsweise werden zur $\alpha$ Aluminiumoxidhydratsuspension neben dem Cerzusatz noch feinste Partikel eines Keimbildners zugegeben. Auf diese Weise wird eine besonders feine Nadelstruktur erreicht.

Als Keimbildner kommen feinstes $\alpha$-$Al_2O_3$, Diaspor, $AlF_3$ oder eine Vorstufe davon in Frage. Der Keimbildner wird in einer Menge bis 5 Gew.-%, bezogen auf das Endprodukt, zugesetzt. Es wurde nämlich festgestellt, daß ein so hergestelltes Material verbesserte Eigenschaften aufweist. Der Grund dafür liegt vermutlich an dem erhöhten Verhältnis von Länge zu Durchmesser der whiskerähnlichen Nadeln, der Durchmesser der Nadeln wird geringer bei gleicher Länge, gleichzeitig steigt die Anzahl der Nadeln je Volumseinheit an.

Eine Erhöhung des Zusatzes von pulvrigem Keimbilner über 5 Gew.-% brachte keinerlei Verbesserung der Eigenschaften. Der Keimbildner kann in Form einer Suspension von feinsten $\alpha$-$Al_2O_3$-Partikeln der Böhmit-Suspension zugesetzt werden. Hergestellt wird eine solche Keimbildnersuspension aus handelsüblichen $\alpha$-$Al_2O_3$-Pulver durch Mahlung und Sedimentation oder jedes andere Verfahren, welches ein submikrones $\alpha$-$Al_2O_3$ ergibt. Selbstverständlich kann das $\alpha$-$Al_2O_3$, Diaspor, $Al_F3$ oder eine Vorstufe davon auch in fester Form vor oder nach der Desagglomeration zugesetzt werden.

Als Säure zur Peptisierung des Pseudo-Böhmits können einwertige Säuren wie Salpetersäure, Salzsäure, Ameisensäure oder Essigsäure verwendet werden.

Die Desagglomeration kann in einem Dispergiergerät nach Rotor-Stator-Prinzip durchgeführt werden. Es können aber auch andere Dispergiergeräte wie beispielsweise Rührwerkskugelmühlen verwendet werden, allerdings ist dabei ein größerer Mahlkörperabrieb oder Metallabrieb in größerer Menge der Qualität des Produkts abträglich.

Als hochdisperse $\alpha$-Aluminiumoxidhydrate können die im Handel befindlichen Pseudoböhmite (Pural[R], Disperal[R], Versal[R]) mit einem Reinheitsgrad von über 99 % und einer spezifischen Oberfläche zwischen 180 und 290 $m^2/g$ verwendet werden. Der Feststoffgehalt der Suspension lag zwischen 5 und 40 Gew.-%, vorzugsweise zwischen 15 und 25 Gew.-%. Als Peptisatorsäure können Salpetersäure, Salzsäure oder Essigsäure eingesetzt werden.

Der während des Desagglomerierens im Dispergierapparat durchgeführte Zusatz des Elements Ce erfolgt in Form eines anorganischen oder organischen Salzes, das nach dem Sintern in Form des Oxids vorliegt. Es kann aber auch grobkornfreies Submikronpulver aus einem Oxid oder Hydroxid des Ce eingesetzt werden. Die Zusätze erfolgen in einer Menge von 0,01 - 0,5 Gew.-% (bezogen als Oxid im Endprodukt).

Die Trocknung wird in einem Dünnschichtverdampfer mit angeschlossenem Bandtrockner durchgeführt. Es kann aber jeder andere Trocknungsapparat verwendet werden, der eine Durchmischung des Gutes in der Trocknungsphase erlaubt, sodaß keine Entmischung mehr möglich ist. Das ist erforderlich, um die gewünschte homogene Verteilung der Nadeln im Endprodukt zu erreichen. Die dabei gebildete Porenstruktur des getrockneten Materials scheint der Bildung der Nadeln förderlich zu sein, da wesentlich weniger Nadeln entstehen, wenn ruhend getrocknet wird.

Das getrocknete Material wird zerkleinert und gesiebt. Das erzielte Korn kann entweder direkt zu Schleifkorn gesintert werden oder es wird in entsprechend feiner Form als Pulver mit organischen Bindemitteln zu Formteilen gepreßt. Dazu eignen sich alle bekannten Preßverfahren wie z. B. Matrizenpressen, Strangpressen oder Walzenpressen.

Das getrocknete bzw. verpreßte Material wird anschließend gesintert. Die Sinterung erfolgt in vier Stufen. Zuerst wird bei 500 - 800°C die Austreibung des Restwassers und der von der Peptisatorsäure stammenden sauren Bestandteile bei gleichzeitiger Umwandlung des Ce-Salzes in das Oxid durchgeführt. In der zweiten Stufe wird bei ca. 800°C der Druck auf 50 - 100 bar erhöht, bis die Umwandlung in $\alpha$-$Al_2O_3$ abgeschlossen ist, das dauert ca. 1 h, wobei die Temperatur auf max. 1100°C ansteigen darf. Bevor geschlossene Poren entstehen, muß der Druck wieder abgesenkt werden, da sonst das komprimierte Gas in den Poren eingeschlossen wird, was das Dichtsintern behindern würde.

In der dritten Stufe erfolgt die Eliminierung des Großteils der offenen Poren. Sie erfolgt ohne Druck bei

EP 0 368 837 B1

1000 - 1300°C. In der vierten Stufe wird das Material unter Druck gesintert. Dabei wird der Gasdruck im Ofen von 1 auf max. 100 bar erhöht. Die Temperatur kann, falls erforderlich, dabei bis auf 1400°C erhöht werden. Vorzugsweise erfolgt die zweite Gasdrucksinterungsstufe bei 1250 - 1350°C. Die Sinterzeiten hängen von der Temperatur ab und liegen zwischen einigen Minuten und max. 3 Stunden je Stufe. Zur Erhaltung der Feinkristallinität erweist es sich als günstiger, etwas länger bei niedrigerer Temperatur zu sintern als kürzere Zeit bei höherer Temperatur. Der vierstufige Sinterprozeß kann prinzipiell in einem geeigneten Ofen durchgeführt werden, es hat sich jedoch als günstig erwiesen, wenn die erste Stufe insbesondere wegen des Anfalls saurer Abgase in einem speziell dafür ausgekleideten Ofen durchgeführt wird.

Das erfindugnsgemäße Material ist hervorragend für Schleifzwecke geeignet, kann aber auch für alle bekannten Einsatzzwecke von Aluminiumoxidkeramik verwendet werden. Für den Einsatz in Schleifscheiben erwies sich eine Zerkleinerung des Materials vor dem sintern als vorteilhaft, für den Einsatz in Bändern und flexiblen Scheiben ist eine Zerkleinerung nach dem Sintern günstiger.

Die Erfindung soll nun an Hand von Beispielen näher erläutert werden.

Beispiel 1 (Suspensionsherstellung)

In eine Lösung von 39,5 kg Wasser und 440 g konz. Salpetersäure wurden kontinuierlich 10 kg $\alpha$-Aluminiumoxidmonohydrat der Marke Disperal[R] eingeführt. Die Suspension wurde dann in einer Laborvakuumentlüftungsanlage bei 100 mbar entlüftet und anschließend durch ein Dispergiergerät mit zwei Zuflußöffnungen gepumpt. Die Durchflußgeschwindigkeit betrug 3 l/h, die Rotordrehzahl lag bei 15000 U/min. In die zweite Zuflußöffnung des dispergiergerätes wurde eine Lösung von 61,4 g/l Cernitrathexahydrat mit 270 ml/h eingepumpt. Die desagglomerierte Suspension wurde dann weiterverarbeitet. Das gesinterte Endprodukt aus dieser Suspension enthielt 1 Gew.-% $CeO_2$.

Beispiel 2

Die Suspension aus Beispiel 1 wurde unter Rühren eingedampft und nach der Koagulation in Polypropylentassen in einem Heißlufttrockner bei 80°C 36 Stunden zu spröden Platten getrocknet. Die getrockneten Platten wurden in einer Hammermühle zu Körnern zerkleinert und in einer Siebmaschine klassiert (Feinkornanteil < 0,1 mm - siehe Bsp. 3). Anschließend wurden die Körner eine Stunde in einem Muffelofen bei 600°C kalziniert. Anschließend wurde das Material im Gasdrucksinterofen auf 900°C erhitzt. Nach Druckerhöhung auf ca. 100 bar wurde die Temperatur innerhalb einer Stunde auf 1100°C erhöht, dann wurde der Druck auf 1 bar abgesenkt und die Temperatur weiter auf 1300°C erhöht. Nach weiteren 1,5 h bei 1300°C wurde 15 min lang bei 100 bar fertiggesintert. Das Material hatte 3 Vol.-% Porosität und enthielt neben $CeO_2$-Partikeln der Größe 100 - 500 nm ca. 20 Vol-% Nadeln mit Durchmessern von 0,2 - 0,5 $\mu$m und einer Länge zwischen 3 und 5 $\mu$m.

Beispiel 3

Getrocknetes Feinkorn (< 0,1 mm) aus Beispiel 2 wurde mit ca. 20 - 25 Gew.-% $H_2O$ gemischt und zu Zylindern (30 mm $\phi$, 5 mm Länge) verpreßt. Das Pressen erfolgte uniaxial in einer Matrize bei 400 MPa. Die Zylinder wurden wie in Beispiel 2 gesintert. Das gesinterte Material hatte 2 Vol.-% Porosität und zeigte praktisch die gleiche Mikrostruktur mit Nadeln wie das Material von Beispiel 2. Die gesinterten Zylinder wurden zu Korn zerkleinert und gesiebt.

Beispiel 4

Die wie in Beispiel 3 gepreßten Zylinder wurden vor dem Sintern zerkleinert und gesiebt. Das gesiebte Korn wurde wie in Beispiel 2 gesintert.

Beispiel 5

Die $\alpha$-Aluminiumoxidmonohydratsuspension wurde wie in Beispiel 1 hergestellt. Die zudosierte Cernitratlösung enthielt 6,2 g/l Cernitrathexahydrat, sodaß im Endprodukt 0,1 Gew.-% $CeO_2$ enthalten waren. Die desagglomerierte Suspension wurde für Beispiel 6 bis 8 verwendet.

Beispiel 6

Die Suspension von Beispiel 5 wurde wie im Beispiel 2 weiterverarbeitet (Trocknung und Sinterung). Das

4

so hergestellte Material hatte 2 Vol.-% Poren und enthielt neben wenig $CeO_2$-Partikeln 15 Vol.-% Nadeln mit Durchmessern zwischen 0,4 und 0,7 $\mu$m und Längen zwischen 6 und 10 $\mu$m.

### Beispiel 7

Das getrocknete Feinstkorn von Beispiel 6 wurde wie im Beispiel 3 zu Zylindern gepreßt, diese gesintert, zerkleinert und gesiebt.

### Beispiel 8

Die in Beispiel 7 gepreßten Zylinder wurden vor dem Sintern zerkleinert und gesiebt. Das gesiebte Korn wurde wie im Beispiel 2 gesintert.

### Beispiel 9

Die $\alpha$-Aluminiumoxidmonohydratsuspension wurde wie im Beispiel 1 hergestellt. Die zudosierte Cernitratlösung enthielt 24,8 g/l Cernitrathexahydrat, sodaß im Endprodukt 0,4 Gew.-% $CeO_2$ enthalten waren.

### Beispiel 10

Die Suspension von Beispiel 9 wurde wie im Beispiel 2 getrocknet, zu Korn zerkleinert, gesiebt und bei 600°C kalziniert. Anschließend wurde das Korn im Gasdrucksinterofen auf 800°C erhitzt. Nach Druckerhöhung auf ca. 90 bar wurde die Temperatur innerhalb einer Stunde auf 1150°C erhöht, dann wurde der Druck auf 1 bar abgesenkt und die Temperatur auf 1350°C erhöht. Nach einer weiteren Stunde bei 1350°C wurde 30 min. bei 100 bar fertiggesintert. Das Material hatte 2 Vol.-% Poren und enthielt neben $CeO_2$-Partikeln 25 Vol.-% Nadeln mit Durchmessern zwischen 0,2 und 0,5 $\mu$m und Längen zwischen 5 und 9 $\mu$m.

### Beispiel 11

Das getrocknete Feinkorn von Beispiel 10 wurde wie in Beispiel 3 zu Zylindern gepreßt und wie im Beispiel 10 gesintert. Nach dem Sintern wurden die Zylinder zu Korn zerkleinert und gesiebt.

### Beispiel 12

Die wie im Beispiel 11 gepreßten Zylinder wurden vor dem Sintern zerkleinert und gesiebt. Das gesiebte Korn wurde wie im Beispiel 10 gesintert.

### Beispiel 13

Die Suspension von Beispiel 9 wurde ruhend bei 80°C in Polypropylentassen getrocknet. Die getrockneten Platten wurden wie im Beispiel 10 weiterverarbeitet. Das gesinterte Produkt enthielt 10 Vol.-% Nadeln. Die Porosität betrug 2,5 Vol.-%. Die Stäbchen waren ungleichmäßig verteilt.

### Beispiel 14 (ohne Ce-Zusatz)

Die Suspension aus Beispiel 1 wurde ruhend in Polypropylentassen in einem Heißlufttrockner bei 80°C 36 Stunden zu spröden Platten getrocknet. Die getrockneten Platten wurden in einer Hammermühle zu Körnern zerkleinert und in einer Siebmaschine klassiert. Anschließend wurden die Körner eine Stunde in einem Muffelofen bei 500°C kalziniert und dann im Gasdrucksinterofen bei 1300°C 2 Stunden bei 1 bar gesintert, danach wurde 15 Min. bei 100 bar fertiggesintert. Das Material hatte 2 Vol.-% Porosität, die Kristallitengröße des $\alpha$-$Al_2O_3$ betrug 0,3 - 0,5 $\mu$m. Es konnten keine Nadeln festgestellt werden.

### Beispiel 15

Die Suspension aus Beispiel 1 wurde sprühgetrocknet und zu Zylindern (30 mm Durchmesser, 5 mm lang) verpreßt. Das Pressen erfolgte uniaxial in einer Matrize bei 400 MPa. Die Zylinder wurden im Muffelofen bei 500°C 1 Stunde kalziniert und anschließend wie im Beispiel 14 im Gasdruck gesintert. Das gesinterte Material hatte 1 Vol.-% Porosität, die Kristallitengröße der $\alpha$-$Al_2O_3$-Kristalle lag unter 0,3 $\mu$m. Die gesinterten Zylinder

wurden zu Korn zerkleinert und gesiebt.

Beispiel 16

Die gepreßten Zylinder aus Beispiel 15 wurden vor dem Sintern zu Korn zerkleinert und gesiebt. Anschließen wurde das Korn wie im Beispiel 14 gesintert.

Beispiel 17

Analog Beispiel 2, jedoch wurde die Zerkleinerung und Siebung nach der Sinterung durchgeführt.

Beispiel 18

Analog Beispiel 6, jedoch wurde die Zerkleinerung und Siebung nach dem Sintern durchgeführt.

Beispiel 19

Analog Beispiel 10, jedoch wurde die Zerkleinerung und Siebung nach dem Sintern durchgeführt.

Beispiel 20

Analog zu Beispiel 13, jedoch wurde die Zerkleinerung und Siebung nach dem Sintern durchgeführt.

Die nach dem erfindungsgemäßen Verfahren hergestellten Schleifmaterialien wurden zu Schleifbändern und Schleifscheiben verarbeitet und in einer vergleichenden Prüfserie gegen Kohlenstoffstahl C 45 wurde die Leistungsfähigkeit des Materials ermittelt. Dabei wurde die Schleifleistung im Vergleich zu Material nach AT-Anm. Nr. 15A 2695/88 (= 100) ermittelt. Die erhaltenen Werte sind in den Tabellen angeführt und zeigen deutlich die hervorragenden Schleifleistungen der erfindungsgemäß hergestellten Materialien.

## Tabelle 1

### Abtragsleistung der Bänder = Gesamtabtrag bis zum

### Absinken der Abtragsgeschwindigkeit auf 10 %

| Material | | Abtragsleistung |
|---|---|---|
| Beispiel | 3 | 220 |
| " | 7 | 170 |
| " | 11 | 250 |
| " | 15 | 100 |
| " | 17 | 210 |
| " | 18 | 150 |
| " | 19 | 240 |
| " | 20 | 180 |

## Tabelle 2

### Schleifleistung der Scheiben - Verhältnis
### materialabtrag zu Scheibenverschleiß

| Material | | Schleifleistung |
|---|---|---|
| Beispiel | 2 | 220 |
| " | 4 | 225 |
| " | 6 | 150 |
| " | 8 | 185 |
| " | 10 | 240 |
| " | 12 | 260 |
| " | 13 | 180 |
| " | 14 | 76 |
| " | 16 | 100 |

## Tabelle 3

### Eigenschaften des Schleifmaterials

|  | Ce | Poren |  | Nadeln |
|---|---|---|---|---|
| Beispiel | Gew.-% | Vol.-% | φ x l (μm) | Vol.-% |
| 2 | 1 | 3 | 0,3 x 4 | ≈ 20 |
| 3 | 1 | 2 | 0,3 x 4 | ≈ 20 |
| 4 | 1 | 2 | 0,3 x 4 | ≈ 20 |
| 6 | 0,1 | 2 | 0,5 x 8 | ≈ 15 |
| 7 | 0,1 | 1 | 0,5 x 8 | ≈ 15 |
| 8 | 0,1 | 1 | 0,5 x 8 | ≈ 15 |
| 10 | 0,4 | 2 | 0,3 x 6 | ≈ 25 |
| 11 | 0,4 | 1 | 0,3 x 6 | ≈ 25 |
| 12 | 0,4 | 1 | 0,3 x 6 | ≈ 25 |
| 13 | 0,4 | 2,5 | 0,4 x 6 | ≈ 10 (ruhend getrocknet) |
| 14 | - | 2 | - | AT Anm. 2695/88 B.2 |
| 15 | - | 1 | - | AT Anm. 2695/88 B.3 |
| 16 | - | 1 | - | AT Anm. 2695/88 B.7 |
| 17 | 1 | 3 | 0,3 x 4 | ≈ 20 |
| 18 | 0,1 | 2 | 0,5 x 8 | ≈ 10 |
| 19 | 0,4 | 2 | 0,3 x 6 | ≈ 25 |
| 20 | 0,4 | 2,5 | 0,4 x 6 | ≈ 20 (ruhend getrocknet) |

Anhand der folgenden Beispiele soll eine Ausführungsvariante der Erfindung näher erläutert werden.

Herstellung eines Keimbildners

Eine Suspension von 6,5 kg Wasser und 3,5 kg Bayer-Tonerde mit 105 g konzentrierter Salpetersäure wurde in einer Rührwerkskugelmühle gemahlen, bis der Median der Korngrößenverteilung 0,6 μm (bestimmt durch Sedigraph) betrug. Die Suspension wurde verdünnt (von 35 Gew.-% $Al_2O_3$ auf 20 Gew.-%) und durch Sedimentation von allen Teilchen > 0,2 μm befreit. Die entstandene feine Suspension enthielt 2 Gew.-% $\alpha$-$Al_2O_3$ und wurde als keimbildender Zusatz verwendet.

Beispiel 21

In 10 kg einer Suspension aus Keimbildner wurden 29,5 kg Wasser, 500 g konzentrierte Salpetersäure und 10 kg $\alpha$-Aluminiumoxidmonohydrat (Disperal[R]) eingerührt. Diese Suspension wurde in einer Vakuumentlüftungsanlage bei 100 mbar entlüftet und anschließend durch ein Dispergiergerät mit zwei Zuflußöffnungen gepumpt. Die Durchflußgeschwindigkeit betrug 3 l/h, die Rotordrehzahl lag bei 15000 U/min. In die zweite Öffnung des Dispergiergeräts wurde eine Lösung von 6,2 g/l Cernitrathexahydrat mit 270 ml/h eingepumpt. Die desagglomerierte Suspension wurde unter Rühren eingedampft und nach der Koagulation in Polypropylentassen in einem Heißlufttrockner bei 80°C 36 Stunden getrocknet. Die getrockneten Platten wurden in einer Hammermühle zu Körnern zerkleinert und in einer Siebmaschine klassiert. Anschließend wurden die Körner in einem Muffelofen bei 600°C kalziniert. Danach wurde das Material im Gasdrucksinterofen auf 900°C erhitzt. Nach Druckerhöhung auf ca. 100 bar wurde die Temperatur innerhalb einer Stunde auf 1100°C erhöht, dann wurde der Druck abgesenkt (auf 1 bar) und die Temperatur weiter auf 1300°C erhöht. Nach weiteren 1,5 Stunden bei 1300°C wurde noch 15 Minuten bei 100 bar fertiggesintert. Das Material hatte 1 Vol.-% Porosität und enthielt 0,1 Gew.-% $CeO_2$. Der Anteil der Nadeln betrug $\approx$ 15 Vol.-%.

Beispiel 22

Es wurde eine gleiche Suspension wie in Beispiel 21 hergestellt mit dem Unterschied, daß die zudosierte Ce-Menge hier 24,8 g/l Cernitrathexahydrat betrug. Diese Suspension wurde wie in Beispiel 21 getrocknet, zu Korn zerkleinert, gesiebt und gesintert. Das Produkt enthielt $\approx$ 0,4 Gew.-% $CeO_2$, 1 Vol.% Poren und ca. 30 Vol.-% Nadeln.

Beispiel 23

Das gesiebte Korn von Beispiel 22 wurde im Muffelofen 2 Stunden bei 1350°C gesintert. Die Porosität betrug 2 Vol.-%, das Korn enthielt ca. 20 Vol.-% Nadeln.

Beispiel 24

Getrocknetes Feinkorn (< 0,1 mm) aus Beispiel 22 wurde mit ca. 20 Gew.-% Wasser gemischt und zu Zylindern (30 mm $\phi$, 5 mm Länge) in einer Matrize uniaxial bei 400 MPa verpreßt. Die gepreßten Zylinder wurden vor dem Sintern zerkleinert und gesiebt. Das gesiebte Korn wurde wie in Beispiel 21 gesintert. Das gesinterte Material hatte 1 Vol.-% Porosität und ca. 30 Vol.-% whiskerähnliche Nadeln.

Beispiel 25

Die Suspension wurde wie im Beispiel 21 hergestellt, die Desagglomerierung erfolgte jedoch in einer Rührwerkskugelmühle, wobei die zugepumpte Cernitratlösung 24,8 g/l Cernitrathexahydrat enthielt. Der Mahlkörperabrieb der $\alpha$ $Al_2O_3$-Kugeln betrug ca. 0,1 Gew.-% (bezogen auf Pseudo-Böhmit). Die Suspension wurde wie in Beispiel 1 getrocknet, zu Korn zerkleinert, gesiebt und gesintert. Das Endprodukt enthielt 0,4 Gew.-% $CeO_2$ und ca. 30 Vol.-% Nadeln.

Beispiel 26

In 20 kg einer Suspension aus Keimbildnern wurden 19,5 kg Wasser, 0,5 kg konzentrierte Salpetersäure und 10 kg $\alpha$-Aluminiumoxidmonohydrat (Disperal[R]) eingerührt. Die Suspension wurde entlüftet, desagglomeriert, die zudosierte Cernitratlösung enthielt 24,8 g/l Cernitrathexahydrat. Die Suspension wurde analog Beispiel 21 getrocknet, zerkleinert, gesiebt und gesintert. Das Produkt enthielt 0,4 Gew.-% $CeO_2$, hatte eine Porosität von 2 Vol.-% und bestand zu ca. 25 Vol.-% aus Nadeln.

Beispiel 27

Die Suspension wurde wie in Beispiel 21 hergestellt, entlüftet und desagglomeriert. Die zudosierte Cernitratlösung enthielt 61,4 g/l Cernitrathexahydrat. Die Weiterverarbeitung der Suspension erfolgte wie in Beispiel 21. Das gesinterte Produkt enthielt 1 Gew.-% $CeO_2$ und hatte 2,5 Vol.-% Poren. Es wurden ca. 20 Vol.-% Nadeln festgestellt.

Beispiel 28 (ohne Keimbildner)

In 39,5 kg Wasser wurden 500 g konzentrierte Salpetersäure und 10 kg $\alpha$-Aluminiumoxidmonohydrat (Disperal[R]) eingerührt. Die Suspension wurde entlüftet und desagglomeriert. Die zudosierte Cernitratlösung enthielt 24,8 g/l Cernitrathexahydrat. Die Suspension wurde dann analog Beispiel 21 weiterverarbeitet. Das Produkt enthielt 0,4 Gew.-% $CeO_2$ und 2 Vol.-% Poren. Der Anteil der Nadeln betrug ca. 20 Vol.-%.

Beispiel 29

In 5 kg einer Suspension mit Keimbilnern wurden 34,5 kg Wasser, 500 g konzentrierte Salpetersäure und 10 kg $\alpha$-Aluminiumoxidmonohydrat (Disperal[R]) eingerührt. Die Suspension wurde wie in Beispiel 21 entlüftet und desagglomeriert. Die zudosierte Cernitratlösung enthielt jedoch 2,5 g/l Cernitrathexahydrat. Die Suspension wurde getrocknet, zerkleinert und gesiebt. Das Korn wurde wie im Beispiel 21 gesintert. Das Material enthielt 0,04 Gew.-% $CeO_2$ und hatte 1 Vol.-% Porosität. Der Anteil der Nadeln betrug $\approx$ 2 Vol.-%.

Beispiel 30

Die Suspension wurde wie in Beispiel 9 hergestellt. Die zudosierte Cernitratlösung enthielt jedoch 1,3 g/l Cernitrathexahydrat. Die Suspension wurde wie in Beispiel 21 getrocknet, zerkleinert und gesiebt. Das Korn wurde im Muffelofen bei 1350°C 2 Std. gesintert. Das Produkt enthielt 0,02 Gew.-% $CeO_2$ und hatte 1 Vol.-% Poren, der Nadelanteil betrug 0,5 Vol.-%.

Die nach dem erfindungsgemäßen Verfahren hergestellten keramischen Materialien wurden zu Schleifscheiben verarbeitet und ihre Schleifleistung wurde am Kohlenstoffstahl C 45 ermittelt.

## Schleifleistung der Scheiben

## Verhältnis Materialabtrag zu Scheibenverschleiß

| Material | | CeO₂ | Schleifleistung |
|---|---|---|---|
| Beispiel 21 | | 0,1 | 120 |
| " | 22 | 0,4 | 150 |
| " | 23 | 0,4 | 120 |
| " | 24 | 0,4 | 180 |
| " | 25 | 0,4 | 150 |
| " | 26 | 0,4 | 160 |
| " | 27 | 1,0 | 130 |
| " | 28 | 0,4 | 100 |
| " | 29 | 0,04 | 85 |
| " | 30 | 0,02 | 70 |

Von den erfindungsgemäßen keramischen Materialien wurde auch in bekannter Weise Korn für Schleifmaterial auf Unterlage hergestellt. Es ergaben sich auch entsprechene Schleifleistungen in Schleifbändern und Schleifpapier.

**Patentansprüche**

1. Gesintertes mikrokristallines keramisches Material auf Basis $\alpha$-$Al_2O_3$ mit einem Zusatz von 0,01 bis 2,0 Gew.-%, vorzugsweise 0,01 - 0,5 Gew.-% einer Cerverbindung, dadurch gekennzeichnet, daß es aus einer mikrokristallinen Matrix und 0,1 - 30 Vol.-%, vorzugsweise 1 - 25 Vol.-% und besonders vorzugsweise 1 - 15 Vol.-% whiskerähnlichen Nadeln besteht, wobei die Cerverbindung im wesentlichen in den Nadeln vorliegt.

2. Keramisches Material nach Anspruch 1, dadurch gekennzeichnet, daß die Ce-Verbindung ein Oxid ist.

3. Keramisches Material nach einem der Ansprüche 1 oder 2, dadurch gekennzeichnet, daß der Ce-Gehalt der Nadeln bis zu 20 Gew.-%, vorzugsweise bis zu 10 Gew.-% beträgt.

4. Keramisches Material nach einem der Ansprüche 1 bis 3, dadurch gekennzeichnet, daß ein Teil des Cer durch ein anderes leichtes Seltenerdmetall aus der Gruppe La, Nd und Pr ersetzt ist.

5. Keramisches Material nach einem der Ansprüche 1 bis 4, dadurch gekennzeichnet, daß die Kristallitengröße im wesentlichen unter 0,5 μm liegt.

6. Verfahren zur Herstellung eines keramischen Materials durch Einrühren eines hochdispersen $\alpha$ Aluminiumoxidhydrats in eine verdünnte Säurelösung, Zugabe einer Cerverbindung im Ausmaß 0,01 - 2 Gew.-%, vorzugsweise 0,01 - 0,5 Gew.-% (gerechnet als $CeO_2$) bezogen auf den Aluminiumoxidgehalt, Trocknung, Zerkleinerung und Sinterung, dadurch gekennzeichnet, daß die Suspension vor der Trocknung entlüftet und desagglomeriert wird und daß der Sintervorgang mehrstufig und vorzugsweise teilweise unter Gasdruck durchgeführt wird.

7. Verfahren nach Anspruch 6, dadurch gekennzeichnet, daß zur $\alpha$ Aluminiumoxidhydratsuspension neben dem Cerzusatz noch feinste Partikel eines Keimbildners oder einer Vorstufe davon zugegeben werden.

8. Verfahren nach einem der Ansprüche 6 oder 7, dadurch gekennzeichnet, daß der Sinterungsprozeß vierstufig bei Temperaturen zwischen 500°C und 1400°C durchgeführt wird.

9. Verfahren nach Anspruch 8, dadurch gekennzeichnet, daß die Sinterung in Stufe zwei und vier und bei einem Gasdruck von 1 bis 1000 bar, vorzugsweise 50 bis 100 bar während 5 Minuten bis max. 3 Stunden erfolgt, wobei die Temperatur in der ersten Stufe zwischen 800°C und 1150°C und in der vierten Stufe zwischen 1250°C und 1400°C eingestellt wird.

10. Verfahren nach einem der Ansprüche 4 bis 9, dadurch gekennzeichnet, daß der Feststoffgehalt der Suspension zwischen 5 und 40 Gew.-%, vorzugsweise zwischen 15 und 25 Gew.-% liegt.

11. Verwendung eines gesinterten mikrokristallinen keramischen Materials nach einem der Ansprüche 1 bis 5, als Schleifmaterial, Schneidkeramik und für andere Einsatzzwecke von $\alpha$ Aluminiumoxidkeramik.

**Claims**

1. Sintered microcrystalline ceramic material on the basis of $\alpha$-$Al_2O_3$ with an addition of 0.01 to 2.0 weight percent, preferably 0.01 to 0.5 weight percent of a cerium compound, characterized in that it consists of a microcrystalline matrix and 0.1 to 30 volume percent, preferably 1 to 25 volume percent and particularly preferably 1 to 15 volume percent whisker-like needles with the cerium compound being substantially present in the needles.

2. Ceramic material in accordance with claim 1, characterized in that the cerium compound is an oxide.

3. Ceramic material in accordance with one of the claims 1 or 2, characterized in that the cerium content of the needles is up to 20 weight percent, preferably up to 10 weight percent.

4. Ceramic material in accordance with one of the claims 1 to 3, characterized in that a part of the cerium is replaced by another light rare earth metal from the group of La, Nd and Pr.

5. Ceramic material in accordance with one of the claims 1 to 4, characterized in that the crystallite size is substantially below 0.5 μm.

6. Method for producing a ceramic material by mixing a highly disperse α-aluminium oxide hydrate into a diluted acid solution, by adding a cerium compound to the extent of 0.01 to 2 weight percent, preferably 0.01 to 0.5 weight percent (calculated as $CeO_2$) referring to the aluminium oxide content, by drying, comminuting and sintering, characterized in that the suspension is deaerated and desagglomerated before the drying and the sintering process is carried out in several stages and preferably partly under gas pressure.

7. Method in accordance with claim 6, characterized in that in addition to the cerium additive ultra-fine particles of a nucleating agent or a precursor thereof are added to the α-aluminium oxide hydrate suspension.

8. Method in accordance with one fo the claims 6 or 7, characterized in that the sintering process is carried out in four stages at temperatures between 500°C and 1400°C.

9. Method in accordance with claim 8, characterized in that the sintering in stage two and four and under a gas pressure of 1 to 1000 bar, preferably 50 to 100 bar is carried out for a period of five minutes up to a maximum of three hours, the temperature in the first stage being set between 800°C and 1150°C and in the fourth stage being set between 1250°C and 1400°C.

10. Method in accordance with one of the claims 4 to 9, characterized in that the solids content of the suspension lies between 5 and 40 weight percent, preferably between 15 and 25 weight percent.

11. Application of a sintered microcrystalline ceramic material in accordance with one of the claims 1 to 5, as abrasive material, as cutting ceramics or for other purposes of α-aluminimum oxide ceramics.

**Revendications**

1. Matériau céramique microcristallin fritté à base d'$Al_2O_3$ α avec addition de 0,01 à 2% en poids, de préférence de 0,01 à 0,5%, d'un composé de cérium, matériau caractérisé en ce qu'il est constitué d'une matrice microcristalline et de 0,1 à 30% en volume, de préférence de 1 à 25% et plus spécialement de 1 à 15%, d'aiguilles en forme de trichites, le composé de cérium se trouvant essentiellement dans les aiguilles.

2. Matériau céramique selon la revendication 1, caractérisé en ce que le composé de cérium est un oxyde.

3. Matériau céramique selon la revendication 1 ou 2, caractérisé en ce que la teneur en cérium des aiguilles peut s'élever jusqu'à 20% en poids, de préférence jusqu'à 10%.

4. Matériau céramique selon l'une des revendications 1 à 3, caractérisé en ce qu'une partie du cérium est remplacée par un autre métal léger de terre rare du groupe La, Nd et Pr.

5. Matériau céramique selon l'une des revendications 1 à 4, caractérisé en ce que la dimension des cristallites est essentiellement inférieure à 0,5 μm.

6. Procédé de préparation d'un matériau céramique par délayage d'un oxyde d'aluminium a hydraté fortement dispersé dans une solution acide diluée, addition d'un composé de cérium à une teneur de 0,01 à 2%, de préférence de 0,01 à 0,5%, en $CeO_2$, du poids d'oxyde d'aluminium, séchage de la suspension puis broyage et frittage, procédé caractérisé en ce qu'avant de sécher la suspension on la désaère et on la désagglomère, et on effectue le frittage en plusieurs étapes et de préférence en partie sous la pression d'un gaz.

7. Procédé selon la revendication 6, caractérisé en ce que l'on ajoute également à la suspension d'oxyde d'aluminium a hydraté, en plus du cérium, de très fines particules d'un formateur de germes ou d'un précurseur de celui-ci.

8. Procédé selon l'une des revendications 6 ou 7, caractérisé en ce que l'on effectue le frittage en quatre étapes à des températures de 500 à 1400°C.

9. Procédé selon la revendication 8, caractérisé en ce que l'on effectue le frittage dans la seconde et la quatrième étape sous une pression gazeuse de 1 à 1000 bar, de préférence de 50 à 100 bar, pendant une durée de 5 minutes à au maximum 3 heures, la température étant comprise entre 800 et 1150°C dans la première étape et entre 1250 et 1400°C dans la quatrième.

10. Procédé selon l'une des revendications 6 à 9, caractérisé en ce que la teneur en matière solide de la suspension est comprise entre 5 et 40% en poids, de préférence entre 15 et 25%.

11. Emploi d'un matériau céramique microcristallin fritté selon l'une des revendications 1 à 5 comme matériau de polissage, matériau céramique de coupe ainsi que pour d'autres utilisations de matières céramiques d'oxyde d'aluminium α.